# EUROPEAN PATENT SPECIFICATION

(11) **EP 4 417 513 B1**
(45) Date of publication and mention of the grant of the patent: **14.01.2026**
(21) Application number: 23157354.4
(22) Date of filing: 17.02.2023
(51) Int. Cl.: B64D 1/22

(54) **CARGO HOOK DEVICE**
LASTHAKENVORRICHTUNG
DISPOSITIF DE CROCHET DE CHARGEMENT

(43) Date of publication of application: 21.08.2024
(73) Proprietor: AIRBUS HELICOPTERS DEUTSCHLAND GmbH, 86609 Donauwörth (DE)
(72) Inventor: BEHRENS, Michael, 86655 HARBURG (DE); EGE, Patrick, 86152 AUGSBURG (DE); SCHOMMARZ, Julia, 54296 TRIER (DE)
(74) Representative: GPI Brevets

(56) References cited:
- GB-A- 2 513 646
- GB-A- 839 629
- US-A- 3 061 355
- US-A- 4 678 219

## Description

The present invention is related to a cargo hook device with a housing that is adapted for attachment to a rotorcraft. The present invention is further related to a rotorcraft that is equipped with such a cargo hook device. The cargo hook device is suitable for transport of human and/or non-human external cargo outside of a rotorcraft.

Rotorcrafts, and in particular helicopters, are commonly used to fulfil aerial transportation and delivery tasks. By way of example, helicopters are used to transport and deliver cargo to mountain regions in general and, more specifically, to mountain regions where no roads exist or where roads cannot be used for transportation and delivery, e. g. due to extreme weather conditions in winter and so on. Furthermore, helicopters are used in transportation and delivery of cargo for military purposes or in the construction sector, where the cargo may represent any kind of material. Moreover, helicopters can be used in firefighting for transportation of firefighting buckets. In addition, helicopters are also very useful in wood logging for transporting harvested wood. In all of these cases, the helicopters can be required to transport comparatively heavy external cargo which can, depending on an underlying type of helicopter, weigh up to several tons.

In order to enable a given helicopter for transportation of external cargo, it can be equipped with a cargo hook device to which an external cargo rope for connection to the external cargo can be attached. Thus, a given external cargo can be suspended from the helicopter by means of the external cargo rope, which is particularly useful for bulky cargo which does not fit into the cabin of the helicopter.

However, such an external cargo rope and also the cargo hook device must be designed and constructed specifically for carrying also comparatively heavy external cargo with a high degree of safety, while being as small as possible for helicopter integration reasons. Furthermore, such designing and constructing also requires the compliance with applicable safety regulations and specifications, such as the US-American Federal Aviation Regulations (FAR) and/or the European Certification Specifications (CS).

According to the FAR and CS, a non-human external cargo (NHEC) is commonly transported by using a cargo hook device in single cargo hook arrangement, i.e. with a single cargo hook. For instance, the document EP 2 036 849 A1 describes a cargo hook arrangement with a single cargo hook for carrying cargo with a helicopter. The single cargo hook is pivotable between a closed position and an open position. A first blocking element is provided, which is pivotable between a blocking position for blocking the single cargo hook in its closed position and a releasing position for allowing the single cargo hook to pivot into its open position. Furthermore, a pivoting mechanism is provided for pivoting the single cargo hook into its open position. The cargo hook arrangement further comprises a second blocking element for blocking the single cargo hook in its closed position. This second blocking element can be a magnet brake acting on the pivoting mechanism and may be controlled via an associated button by a pilot of the helicopter. Furthermore, the cargo hook arrangement may comprise a third blocking element for blocking the movement of the first blocking element. This third blocking element may be an eccentric and it may also be controlled via an associated button by a pilot of the helicopter. The documents GB2513646, GB839629, US4678219 and US3061355 were cited.

In contrast thereto, a human external cargo (HEC) is commonly transported by using a cargo hook device in double cargo hook arrangement, i.e. with two separate cargo hooks. More specifically, in the double cargo hook arrangement two cargo hooks are provided in order to fulfil e. g. the safety requirements for HEC transportation according to FAR 29.865-CS 27/29.865. The two cargo hooks are generally connected to an external cargo rope via an intermediate Y-rope, and the external cargo rope may then be attached to the HEC. However, one of the two cargo hooks usually only acts as back-up cargo hook. In other words, the complete mass of an external cargo is generally almost exclusively transferred to a given helicopter in operation via a first one of the two cargo hooks, such that although a second cargo hook with an associated self-weight is provided, it is only acting as back-up cargo hook and almost unused for transportation or load supporting purposes. Thus, the self-weight of the back-up cargo hook merely represents additional weight that must also be transported by the helicopter and, therefore, negatively impacts respective helicopter performances.

Nevertheless, provision of the back-up cargo hook is not mandatory if a respective single cargo hook fulfills the applicable safety requirements for HEC transportation. In other words, such a single cargo hook must meet a predefined failure rate for the loss of cargo as well as the loss of cargo release function to fulfill the applicable safety requirements for HEC transportation.

More specifically, the FAR 29.865-CS 27/29.865 requests two independent release capabilities for a cargo hook device that is used for HEC transportation, i. e. a Primary Quick Release System (PQRS) and a Back-Up Quick Release System (BQRS), which are required for switching an associated cargo hook from a locked state to a released state that enables release of a given HEC. Hence, two release possibilities are to be provided to counteract an underlying risk of loss of release function. However, the two independent release possibilities are the main contributors to a risk of unintended release and they are crucial to reach a required safety level.

It is an object of the present invention to provide a new cargo hook device with a single cargo hook, which is suitable to reduce a respective risk of unintended cargo hook release triggered by PQRS and/or BQRS significantly while maintaining a requested safety objective to release external cargo as required by the FAR 29.865-CS 27/29.865.

This object is solved by a cargo hook device with a cargo hook and a housing that is adapted for attachment to a rotorcraft, wherein the cargo hook device comprises the features of claim 1. More specifically, according to the present invention a cargo hook device with a housing that is adapted for attachment to a rotorcraft is provided. The housing accommodates at least partly a cargo hook that is adapted for carrying a cargo in a closed position and that is rotatable between the closed position and an open position, and a cargo hook blocking and releasing mechanism that is adapted for blocking, in a locked state, the cargo hook in the closed position and for releasing, in a released state, the cargo hook to enable rotation of the cargo hook between the closed position and the open position. The cargo hook blocking and releasing mechanism comprises a blocking arm that blocks, in the locked state, movement of the cargo hook; an activatable locking lever that blocks, in the locked state, movement of the blocking arm; and an activatable safety locking device that blocks, in the locked state, movement of one of the cargo hook, the blocking arm, or the activatable locking lever. The activatable locking lever and the activatable safety locking device are activatable independent from each other.

Advantageously, the inventive cargo hook device complies with the requirements of FAR 29.865-CS 27/29.865 and comprises two distinct blocking and releasing units for a single cargo hook, i. e. the activatable locking lever and the activatable safety locking device, which are activatable independent from each other. Preferably, each one of the two distinct blocking and releasing units has two separated release functions, i. e. PQRS and BQRS. Accordingly, in case of PQRS failure for one or both of the two distinct blocking and releasing units the BQRS is still available, and *vice versa.* Consequently, in case of PQRS or BQRS failure there is still full compliance with the requirements of FAR 29.865-CS 27/29.865 for loss of cargo and loss of cargo release function as no single point failure in either PQRS or BQRS can lead to either loss of cargo, or loss of cargo release function.

More specifically, the activatable locking lever may have two first separated release functions PQRS1 and BQRS1, and the activatable safety locking device may have two second separated release functions PQRS2 and BQRS2. Thus, a respective safety level for the single cargo hook may be increased significantly such that the inventive cargo hook device is suitable to reduce a respective risk of unintended cargo hook release triggered by PQRS and/or BQRS while maintaining a requested safety objective to release external cargo as required by the FAR 29.865-CS 27/29.865.

More particularly, in order to increase the safety level for the single cargo hook to a safety level required for HEC, the activatable safety locking device is provided in addition to the activatable locking lever and may be positioned at one of a plurality of different selectable positions in the housing of the cargo hook device. The activatable safety locking device is preferably integrated into the inventive cargo hook device such that even if only one of the two separated release functions (e. g. PQRS2 or BQRS2) of the activatable locking lever is activated unintendedly the single cargo hook cannot change state from closed position to open position. In fact, in this case the activatable locking lever is activated but the activatable safety locking device is inactivated and, thus, locks the single cargo hook in its closed position. The same applies *vice versa* in case of an unintentional activation of the activatable safety locking device.

Preferably, a standard or default state of the activatable locking lever is an inactivated state in which the activatable locking lever operates in a blocking mode. Likewise, a standard or default state of the activatable safety locking device is also an inactivated state in which the activatable safety locking device operates in a blocking mode. Thus, in order to release a cargo that is attached to the single cargo hook in its closed position, both the activatable locking lever and the activatable safety locking device must be activated to allow free rotation of the single cargo hook from its closed position to its open position. More specifically, preferably both the activatable locking lever and the activatable safety locking device must be activated to enable free rotation of the cargo hook device's blocking arm.

Advantageously, the activatable safety locking device comprises e. g. a safety pin. As the activatable safety locking device is required to reach the necessary safety level for the single cargo hook, in particular with respect to loss of cargo, it is preferably provided with its own redundant release functions to avoid a loss of cargo release function. One option to realize the redundant release functions consists in provision of two separate solenoids, one acting e. g. as PQRS2 and the other one as BQRS2. When one or both of the two separate solenoids is/are activated, one or both of them may e. g. push the safety pin from a blocking position into a releasing position, for instance against a spring element that biases the safety pin into its blocking position. Thus, once activation of the two separate solenoids is stopped, the spring element would push the safety pin back into the blocking position.

Preferably, the PQRS2 and BQRS2 and, likewise, the activatable locking levers' PQRS1 and BQRS1 are triggered electrically for an electrical activation of respectively associated solenoids. For instance, the PQRS1 may be triggered by pushing a pushbutton provided on a cyclic stick of a rotorcraft, and the PQRS2 may be triggered by lifting a flip-cover that covers the pushbutton on the cyclic stick. Similarly, the BQRS1 may be triggered by pulling a release lever provided on a collective stick of the rotorcraft, and the BQRS2 may be triggered by pulling a lock lever which secures the release lever on the collective stick. Alternatively, the BQRS1 may be provided for hydraulic actuation within the cargo hook device.

Preferably, the PQRS2 of the activatable safety locking device must always be triggered before the PQRS1 of the activatable locking lever may be triggered. Furthermore, the activatable safety locking device is preferably only loaded in case of structural failure of a cargo hook component or PQRS1/BQRS1, or an unintended activation of PQRS1/BQRS1.

In an alternative realization, a switch and a flip-cover which are each mechanically divided into two separately operable parts may be used to trigger the PQRS1, PQRS2, BQRS1, and BQRS2. More specifically, a first part of the switch may be used to trigger the PQRS1, and another part to trigger the BQRS1. Likewise, a first part of the flip-cover may be used to trigger the PQRS2, and another part to trigger the BQRS2. The divided switch and flip-cover may e. g. be arranged all together on a cyclic stick of a rotorcraft. Furthermore, a required independence and separation of the PQRS1 and BQRS1, as well as PQRS2 and BQRS2, may preferably be ensured by using different bus systems and electrical power sources.

By way of example, as described above two separate solenoids may act as PQRS2 and BQRS2 and, when activated, push e. g. a safety pin of the activatable safety locking device from the blocking position into the releasing position, against a spring element that biases the safety pin into its blocking position. The two separate solenoids, i. e. the PQRS2 and the BQRS2, are e. g. triggered by lifting the above described flip-cover which is mechanically divided into two separately operable parts. Preferably, electrical power required for functioning of the two separate solenoids, i. e. the PQRS2 and the BQRS2, is supplied from two separate and independent electrical power sources, one for each one of the two solenoids, i. e. one for the PQRS2 and another one for the BQRS2.

In any case, functioning of the above-described cargo hook device in a given rotorcraft may be monitored, e. g. using a multifunctional-display (MFD) in the rotorcraft. For instance, if the flip-cover that triggers the PQRS2 or BQRS2 is lifted, an ARMED indication may be indicated on the MFD. Likewise, if the activatable safety locking device is not locked, an ARMED indication may be indicated on the MFD. Monitoring of the activatable safety locking device may be performed using a sensor to determine e. g. a current position of the safety pin. Furthermore, if e. g. the pushbutton which triggers the PQRS1 or BQRS1 is pushed, a RELEASE indication may be indicated on the MFD. Finally, if the cargo hook is opened, an OPEN indication may be indicated on the MFD. Monitoring of the cargo hook may be performed using a sensor to determine e. g. a current position of the cargo hook.

Advantageously, the provision of a single cargo hook with the inventive cargo hook device enables a significant weight reduction, a simplified integration and, if integrated into the fuselage, a reduced space allocation compared to a conventional dual hook configuration, thus, resulting in an increase of available space for e. g. a fuel tank, and a reduced risk e. g. for fuel tank penetration in case of a crash due to omission of a respective back-up cargo hook and its associated frame components. In addition, the provision of a single cargo hook with the inventive cargo hook device results in reduced direct maintenance costs and a simplified operation, as the question no more arises whether a given hook is to be used as a main cargo hook or only as a back-up cargo hook. Finally, use of a Y-rope is no more necessary.

According to some aspects, the cargo hook is rotatably mounted to the housing by means of a cargo hook rotation shaft.

According to some aspects, the blocking arm is rotatably mounted to the housing by means of a blocking arm rotation shaft.

The blocking arm may comprise a first bearing that abuts, in the locked state, against the cargo hook to block movement of the cargo hook.

The blocking arm may further comprise a second bearing that abuts, in the locked state, against the activatable locking lever to block movement of the blocking arm.

According to some aspects, the activatable locking lever is rotatably mounted to the housing by means of a locking lever rotation shaft.

According to some aspects, the cargo hook blocking and releasing mechanism comprises at least one locking lever actuator for actuating the activatable locking lever.

The cargo hook blocking and releasing mechanism may comprise at least a main locking lever actuator and a redundant locking lever actuator for actuating the activatable locking lever, wherein the main locking lever actuator and the redundant locking lever actuator are operable independent from each other.

The activatable safety locking device comprises a movable safety element.

The activatable safety locking device comprises a spring element that biases the movable safety element into a blocking position.

The cargo hook blocking and releasing mechanism comprises at least one safety locking device actuator for actuating the activatable safety locking device.

The cargo hook blocking and releasing mechanism comprises at least a main safety locking device actuator and a redundant safety locking device actuator for actuating the activatable safety locking device, wherein the main safety locking device actuator and the redundant safety locking device actuator are operable independent from each other.

The present invention relates further to a rotorcraft with a fuselage and a cargo hook device as described above, wherein the cargo hook device is mounted to the fuselage.

According to some aspects, the cargo hook blocking and releasing mechanism of the cargo hook device comprises at least a main safety locking device actuator and a redundant safety locking device actuator for actuating the activatable safety locking device, wherein the main safety locking device actuator and the redundant safety locking device actuator are operable independent from each other, wherein a first operating element for operating the main safety locking device actuator is provided on a first control element of the rotorcraft, and wherein a second operating element for operating the redundant safety locking device actuator is provided on a second control element of the rotorcraft.

According to some aspects, the cargo hook blocking and releasing mechanism of the cargo hook device comprises at least a main safety locking device actuator and a redundant safety locking device actuator for actuating the activatable safety locking device, wherein the main safety locking device actuator and the redundant safety locking device actuator are operable independent from each other, and wherein two separate operating elements for independently operating the main safety locking device actuator and the redundant safety locking device actuator are provided together on a single control element of the rotorcraft.

Preferred embodiments of the invention are outlined by way of example in the following description with reference to the attached drawings. **In** these attached drawings, identical or identically functioning components and elements are labeled with identical reference numbers and characters and are, consequently, only described once in the following description.
- Figure 1 shows a perspective view of a rotorcraft with a cargo hook device comprising a cargo hook according to the present invention,
- Figure 2 shows a schematic view of the cargo hook device of Figure 1 with the cargo hook in closed position, and with a cargo hook blocking and releasing mechanism in locked state,
- Figure 3 shows a schematic view of the cargo hook device of Figure 2 with the cargo hook in closed position, and with the cargo hook blocking and releasing mechanism in locked state,
- Figure 4 shows a schematic view of the cargo hook device of Figure 2 and Figure 3 with the cargo hook in open position, and with the cargo hook blocking and releasing mechanism in released state,
- Figure 5 shows a schematic view of the cargo hook device of Figure 2 and Figure 3 with the cargo hook in closed position, and with several variants of the cargo hook blocking and releasing mechanism in locked state,
- Figure 6 shows a schematic cut view of the cargo hook device of Figure 5, seen along a cut line VI-VI in Figure 5,
- Figure 7 shows a functional diagram of the cargo hook blocking and releasing mechanism of Figure 2 to Figure 4 with associated operating elements for operating the cargo hook blocking and releasing mechanism,
- Figure 8 shows a side view of a cyclic stick and a collective stick of a rotorcraft, which are provided with the operating elements of Figure 7,
- Figure 9 shows a schematic view of alternative operating elements provided on the cyclic stick of Figure 8, and
- Figure 10 shows an alternative functional diagram of the cargo hook blocking and releasing mechanism of Figure 2 to Figure 4 with the alternative operating elements of Figure 9.

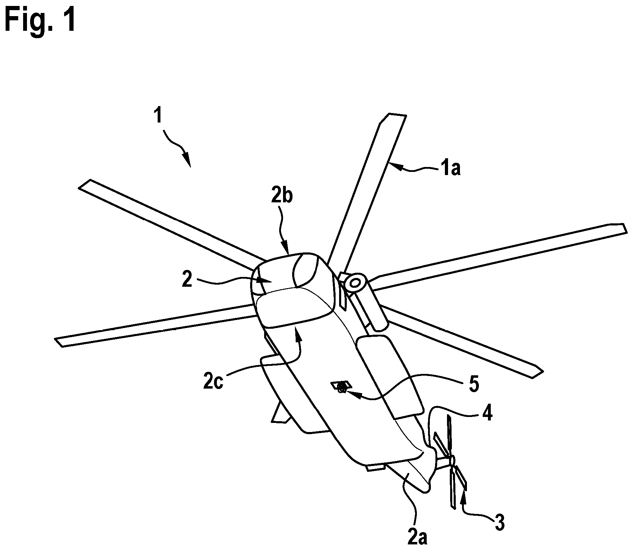

Figure 1 shows a rotorcraft 1 that illustratively comprises a fuselage 2 with a bottom shell 2c. By way of example, the fuselage 2 forms a cabin 2b for passengers and/or cargo and a tail boom 2a is mounted to the fuselage 2. The rotorcraft 1 illustratively further comprises at least one main rotor 1a configured to provide lift and forward or backward thrust during operation, and at least one counter-torque device 3 configured to provide counter-torque during operation, i. e. to counter the torque created by rotation of the at least one main rotor 1a, for purposes of balancing the rotorcraft 1 in terms of yaw.

The at least one counter-torque device 3 is illustratively provided at an aft section of the tail boom 2a, which preferably further comprises a fin 4. However, it should be noted that the at least one counter-torque device 3, as well as the fin 4 provided at the aft section of the tail boom 2a, are merely described for illustrating one possible realization of the rotorcraft 1.

According to one aspect, the rotorcraft 1 is provided with a cargo hook device 5. By way of example, the cargo hook device 5 is attached to the rotorcraft 1 at the bottom shell 2c.

Illustratively, the rotorcraft 1 with the cargo hook device 5 is shown in operation. In this illustrative operation, the cargo hook device 5 may e. g. be used for inserting/extracting persons, i. e. human cargo, and/or goods and loads, i. e. non-human cargo, into/from a respective environment.

By way of example, the rotorcraft 1 is embodied as a helicopter and, therefore, also referred to as "the helicopter 1" hereinafter, for simplicity and clarity. However, use of the cargo hook device 5 is not limited to use with a helicopter. Instead, the cargo hook device 5 may also be used with other rotorcrafts, such as e. g. tiltrotor aircrafts, compound helicopters, multicopters and so on, but also with other vehicles or even cranes, such as building cranes, ship cranes and so on.

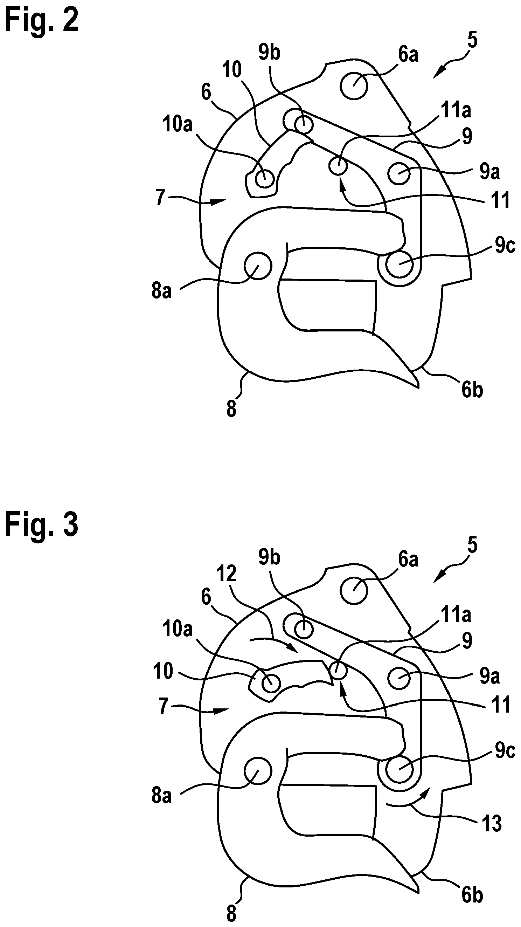

Figure 2 shows the cargo hook device 5 of Figure 1, which comprises a housing 6 that is adapted for attachment to a rotorcraft, e. g. the helicopter 1 of Figure 1. However, the housing 6 may alternatively, or in addition, also be adapted for attachment to another rotorcraft, such as e. g. a tiltrotor aircraft, a compound helicopter, a multicopter and so on, or to another vehicle or even a crane, such as a building crane, a ship crane and so on.

Illustratively, the housing 6 comprises a mounting shaft 6a and a closing latch 6b protruding from the housing 6. The mounting shaft 6a may e. g. be used for mounting the housing 8 to the helicopter 1 of Figure 1.

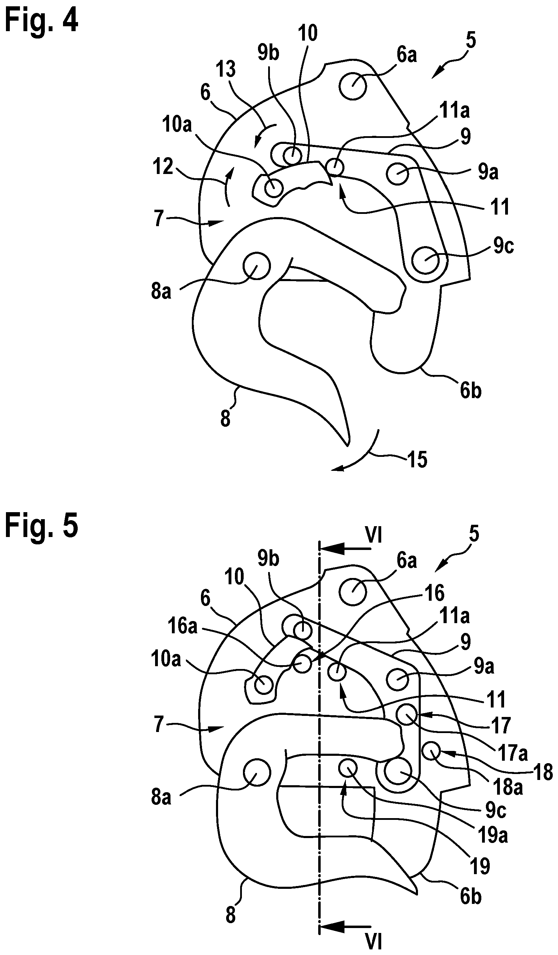

More specifically, the housing 6 accommodates at least partly a cargo hook blocking and releasing mechanism 7, and a cargo hook 8. The cargo hook 8 is rotatable between a closed position - illustrated in Figure 2 and Figure 3 - and an open position - illustrated in Figure 4 - and is adapted for carrying a cargo in the closed position. For instance, the cargo hook 8 may be mounted rotatably to the housing 6 by means of a cargo hook rotation shaft 8a. Illustratively, the cargo hook 8 abuts against the closing latch 6b in the closed position, thus, forming a closed loop with the housing 6 in the closed position.

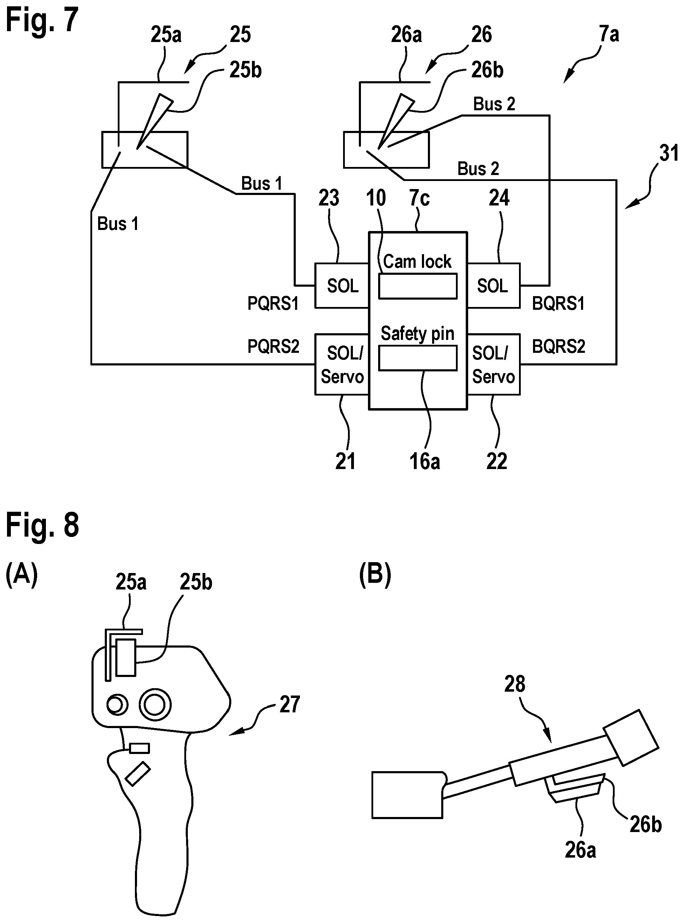

The cargo hook blocking and releasing mechanism 7 is adapted for blocking, in a locked state - illustrated in Figure 2 and Figure 3 -, the cargo hook 8 in the closed position and for releasing, in a released state - illustrated in Figure 4 -, the cargo hook 8 to enable rotation of the cargo hook 8 between the closed position and the open position. More particularly, the cargo hook blocking and releasing mechanism 7 comprises a blocking arm 9, an activatable locking lever 10, and an activatable safety locking device 11. The activatable locking lever 10 and the activatable safety locking device 11 are activatable independent from each other, as explained in detail below at Figure 7 to Figure 10.

The blocking arm 9 blocks, in the locked state of the cargo hook blocking and releasing mechanism 7, movement of the cargo hook 8. The blocking arm 9 may be mounted rotatably to the housing 6 by means of a blocking arm rotation shaft 9a. Illustratively, the blocking arm 9 comprises a first bearing 9c that abuts, in the locked state of the cargo hook blocking and releasing mechanism 7, against the cargo hook 8 to block movement of the cargo hook 8. The blocking arm 9 illustratively further comprises a second bearing 9b that abuts, in the locked state of the cargo hook blocking and releasing mechanism 7, against the activatable locking lever 10 to block movement of the blocking arm 9. The bearings 9b, 9c may be embodied as roller bearings which are mounted to the blocking arm 9.

The activatable locking lever 10 blocks, in the locked state of the cargo hook blocking and releasing mechanism 7, movement of the blocking arm 9. The activatable locking lever 10 may be mounted rotatably to the housing 6 by means of a locking lever rotation shaft 10a. By way of example, the activatable locking lever 10 may be embodied as a cam lock assembly.

The activatable safety locking device 11 blocks, in the locked state of the cargo hook blocking and releasing mechanism 7, movement of one of the cargo hook 8, the blocking arm 9, or the activatable locking lever 10. By way of example, the activatable safety locking device 11 blocks, in the locked state of the cargo hook blocking and releasing mechanism 7, movement of the blocking arm 9 and, thus, indirectly movement of the cargo hook 8. For instance, the activatable safety locking device 11 may comprise a moveable safety element 11a that abuts against the blocking arm 9 to block movement of the blocking arm 9.

Figure 3 shows the cargo hook device 5 of Figure 2 with the housing 6 that accommodates at least partly the cargo hook blocking and releasing mechanism 7 and the cargo hook 8. The cargo hook 8 is illustrated in the closed position and mounted rotatably to the housing 6 by means of the cargo hook rotation shaft 8a. The cargo hook blocking and releasing mechanism 7 is illustrated in the locked state and comprises the blocking arm 9 with the roller bearings 9b, 9c, the activatable locking lever 10, and the activatable safety locking device 11 with the movable safety element 11a. The blocking arm 9 is rotatably mounted to the housing 6 by means of the blocking arm rotation shaft 9a, and the activatable locking lever 10 is rotatably mounted to the housing 6 by means of the locking lever rotation shaft 10a.

For switching the cargo hook blocking and releasing mechanism 7 from the locked state to the released state, the activatable locking lever 10 and the activatable safety locking device 11 must preferably be activated. Activation of the activatable locking lever 10 preferably results in rotation of the activatable locking lever 10 in a locking lever releasing rotation direction 12 around the locking lever rotation shaft 10a. Thereby, the roller bearing 9b may roll on the activatable locking lever 10.

Activation of the activatable safety locking device 11 preferably results in a shifting of the movable safety element 11a away from the blocking arm 9. Thus, the blocking arm 9 is freed and may rotate in a blocking arm releasing rotation direction 13 around the blocking arm rotation shaft 9a away from the cargo hook 8. Thus, the roller bearing 9c may roll on the cargo hook 8.

Figure 4 shows the cargo hook device 5 of Figure 2 and Figure 3 with the housing 6 that accommodates at least partly the cargo hook blocking and releasing mechanism 7 and the cargo hook 8. The cargo hook 8 is mounted rotatably to the housing 6 by means of the cargo hook rotation shaft 8a. The cargo hook blocking and releasing mechanism 7 comprises the blocking arm 9 with the roller bearings 9b, 9c, the activatable locking lever 10, and the activatable safety locking device 11 with the movable safety element 11a. The blocking arm 9 is rotatably mounted to the housing 6 by means of the blocking arm rotation shaft 9a, and the activatable locking lever 10 is rotatably mounted to the housing 6 by means of the locking lever rotation shaft 10a.

In contrast to Figure 2 and Figure 3, the cargo hook blocking and releasing mechanism 7 is now illustrated in the released state and the cargo hook 8 is now illustrated in the open position, which is enabled by activation of the activatable locking lever 10 and the activatable safety locking device 11. More specifically, the activatable locking lever 10 is rotated in the locking lever releasing rotation direction 12 of Figure 3, the movable safety element 11a of the activatable safety locking device 11 is shifted away from the blocking arm 9, and the blocking arm 9 is rotated in the blocking arm releasing rotation direction 13 of Figure 3 such that the cargo hook 8 is rotated around the cargo hook rotation shaft 8a in a cargo hook releasing rotation direction 15 from the closed position of Figure 2 and Figure 3 into the illustrated open position.

It should be noted that both the activatable locking lever 10 and the activatable safety locking device 11 must mandatorily be activated to enable the cargo hook 8 to rotate around the cargo hook rotation shaft 8a in the cargo hook releasing rotation direction 15 from the closed position of Figure 2 and Figure 3 into the illustrated open position. If only one of the activatable locking lever 10 and the activatable safety locking device 11 is activated, the cargo hook blocking and releasing mechanism 7 remains in the locked state and the cargo hook 8 may not rotate around the cargo hook rotation shaft 8a in the cargo hook releasing rotation direction 15.

Figure 5 shows the cargo hook device 5 of Figure 2 with the housing 6 that accommodates at least partly the cargo hook blocking and releasing mechanism 7 and the cargo hook 8. The cargo hook 8 is illustrated in the closed position and mounted rotatably to the housing 6 by means of the cargo hook rotation shaft 8a. The cargo hook blocking and releasing mechanism 7 is illustrated in the locked state and comprises the blocking arm 9 with the roller bearings 9b, 9c, the activatable locking lever 10, and the activatable safety locking device 11 with the movable safety element 11a. The blocking arm 9 is rotatably mounted to the housing 6 by means of the blocking arm rotation shaft 9a, and the activatable locking lever 10 is rotatably mounted to the housing 6 by means of the locking lever rotation shaft 10a.

In addition, Figure 5 illustratively shows possible locations of additional or alternative activatable safety locking devices 16, 17, 18, 19, which are respectively provided with associated movable safety elements 16a, 17a, 18a, 19a. Each one of the additional or alternative activatable safety locking devices 16, 17, 18, 19 is arranged in the housing 6 such that it may block movement of at least one of the cargo hook 8, the blocking arm 9, or the activatable locking lever 10.

For instance, the additional or alternative activatable safety locking device 16 is arranged such that it may block movement of the activatable locking lever 10. The additional or alternative activatable safety locking devices 17 and 18 are arranged such that they may block movement of the blocking arm 9. The additional or alternative activatable safety locking device 19, in turn, is arranged such that it may block movement of the cargo hook 8.

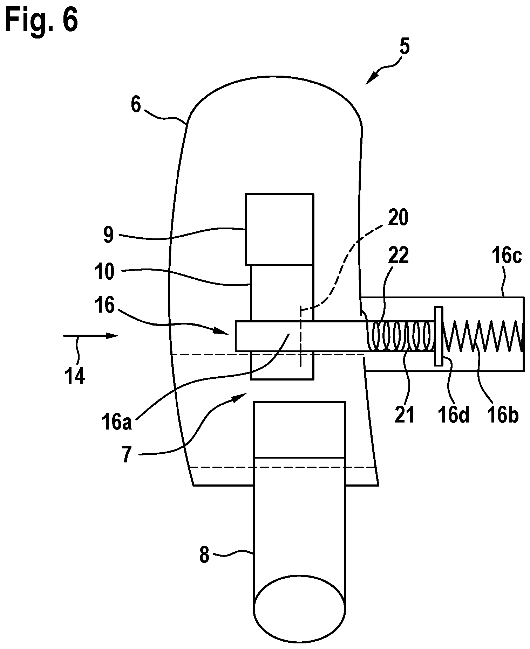

Figure 6 shows the cargo hook device 5 of Figure 5 seen along a cut line VI-VI in Figure 5. The cargo hook device 5 comprises the housing 6 that accommodates at least partly the cargo hook blocking and releasing mechanism 7 and the cargo hook 8 which is illustrated in the closed position. The cargo hook blocking and releasing mechanism 7 is illustrated in the locked state and comprises the blocking arm 9, the activatable locking lever 10, and the activatable safety locking device 16 with the movable safety element 16a.

Illustratively, the cargo hook blocking and releasing mechanism 7 further comprises at least one and, preferably, two safety locking device actuators for actuating the activatable safety locking device 16. More specifically, a main safety locking device actuator 21, e. g. a main solenoid, and a redundant safety locking device actuator 22, e. g. a redundant solenoid, are preferably provided for actuating the activatable safety locking device 16. The main safety locking device actuator 21 and the redundant safety locking device actuator 22 are operable independent from each other and preferably energized using separate power sources which are independent from each other.

The activatable safety locking device 16 illustratively comprises a spring element 16b that biases the movable safety element 16a into a blocking position, as shown in Figure 6. The spring element 16b may be arranged in a safety locking device housing 16c. By way of example, the safety locking device housing 16c extends laterally from the housing 6. However, the safety locking device housing 16c may also be arranged directly inside the housing 6 to avoid provision of the externally protruding safety locking device housing 16c as illustrated.

The movable safety element 16a may be implemented as a safety pin. For simplicity and brevity, the movable safety element 16a is hereinafter referred to as "the safety pin 16a". Illustratively, the safety pin 16a comprises a pin base 16d against which the spring element 16b, such as e. g. a compression spring, abuts to bias the safety pin 16a into the blocking position.

In one exemplary realization, actuation of the activatable safety locking device 16 consists in energizing at least one of respective solenoids which embody the main safety locking device actuator 21 and the redundant safety locking device actuator 22. Thus, the solenoid(s) extending between the housing 6 and the pin base 16d push the safety pin 16a against the force of the compression spring 16b in a safety pin releasing movement direction 14 from the blocking position into a releasing position, consequently, allowing free rotation of the activatable locking lever 10.

It should be noted that the safety pin 16a as shown extends in its blocking position over the entire width of the activatable locking lever 10. However, a respective length of the safety pin 16a may also be shortened as long as it is capable of blocking the activatable locking lever 10 in its blocking position. By way of example, one alternative safety pin end face position of a shortened safety pin in its blocking position is illustrated with a dashed line 20.

Figure 7 shows a functional diagram 7a explaining operation of the activatable locking lever 10 and the safety pin 16a of Figure 5 and Figure 6, which form actively controllable blocking and releasing components 7c of the cargo hook blocking and releasing mechanism 7 of Figure 5 and Figure 6. According to Figure 6, the safety pin 16a is shown with the main safety locking device actuator 21 and the redundant safety locking device actuator 22.

Similar to the safety pin 16a, the activatable locking lever 10 comprises at least one and, preferably, two locking lever actuators for actuating the activatable locking lever 10, which are implemented as part of the cargo hook blocking and releasing mechanism 7 of Figure 5 and Figure 6. More specifically, a main locking lever actuator 23 and a redundant locking lever actuator 24 are preferably provided for actuating the activatable locking lever 10, which may be embodied using a cam lock assembly. The main locking lever actuator 23 and the redundant locking lever actuator 24 are operable independent from each other and preferably energized using separate power sources which are independent from each other.

For instance, the main locking lever actuator 23 may comprise a first solenoid and the redundant locking lever actuator 24 may comprise a second solenoid. Illustratively, the main locking lever actuator 23 acts as PQRS1 and the redundant locking lever actuator 24 acts as BQRS1. Thus, if e. g. the PQRS1 fails, the BQRS1 is preferably still available, and *vice versa,* so that a suitable loss of load release function may be realized for the activatable locking lever 10.

Likewise, the main safety locking device actuator 21 may comprise a third solenoid and the redundant safety locking device actuator 22 may comprise a fourth solenoid. Alternatively, the main safety locking device actuator 21 may comprise a first servo control and the redundant safety locking device actuator 22 may comprise a second servo control. Illustratively, the main safety locking device actuator 21 acts as PQRS2 and the redundant safety locking device actuator 22 acts as BQRS2. Thus, if e. g. the PQRS2 fails, the BQRS2 is preferably still available, and *vice versa,* so that a suitable loss of load release function may be realized for the safety pin 16a.

The PQRS1, PQRS2, BQRS1, and BQRS2 are illustratively triggered via an associated bus system 31. Preferably, the PQRS1, PQRS2, BQRS1, and BQRS2 are triggered electrically using associated operating elements 25, 26 for an electrical activation of respectively associated solenoids.

Illustratively, the operating element 25 comprises an operating element 25a provided for triggering the PQRS2 of the safety pin 16a, i. e. the main safety locking device actuator 21, via a first bus Bus 1, and an operating element 25b provided for triggering the PQRS1 of the activatable locking lever 10, i. e. the main locking lever actuator 23, via the first bus Bus 1. As the PQRS1 and the PQRS2 are triggered via the same bus Bus 1, they may be connected to a common, first power source.

The operating element 26, in turn, comprises illustratively an operating element 26a provided for triggering the BQRS2 of the safety pin 16a, i. e. the redundant safety locking device actuator 22, via a second bus Bus 2, and an operating element 26b provided for triggering the BQRS1 of the locking lever actuator 10, i. e. the redundant locking lever actuator 24, via the second bus Bus 2. As the BQRS1 and the BQRS2 are triggered via the same bus Bus 2, they may be connected to a common, second power source.

Figure 8 shows in part (A) an illustrative first control element 27 of a rotorcraft, e. g. rotorcraft 1 of Figure 1, which is illustratively embodied as a cyclic stick, and in part (B) an illustrative second control element 28 of the rotorcraft, which is illustratively embodied as a collective stick. The cyclic stick 27 according to part (A) may be provided with the operating elements 25a, 25b of Figure 7, i. e. with the operating elements provided for triggering the PQRS2 of the safety pin 16a and the PQRS1 of the activatable locking lever 10 of Figure 7. The collective stick 28 according to part (B), in turn, may be provided with the operating elements 26a, 26b of Figure 7, i. e. with the operating elements provided for triggering the BQRS2 of the safety pin 16a and the BQRS1 of the activatable locking lever 10 of Figure 7.

By way of example, the operating element 25a on the cyclic stick 27 in part (A) may be implemented by means of a flip cover, and the operating element 25b may be implemented by means of a switch or pushbutton covered by the flip cover in closed state. The operating elements 26a, 26b, in turn, may be implemented by levers or handles.

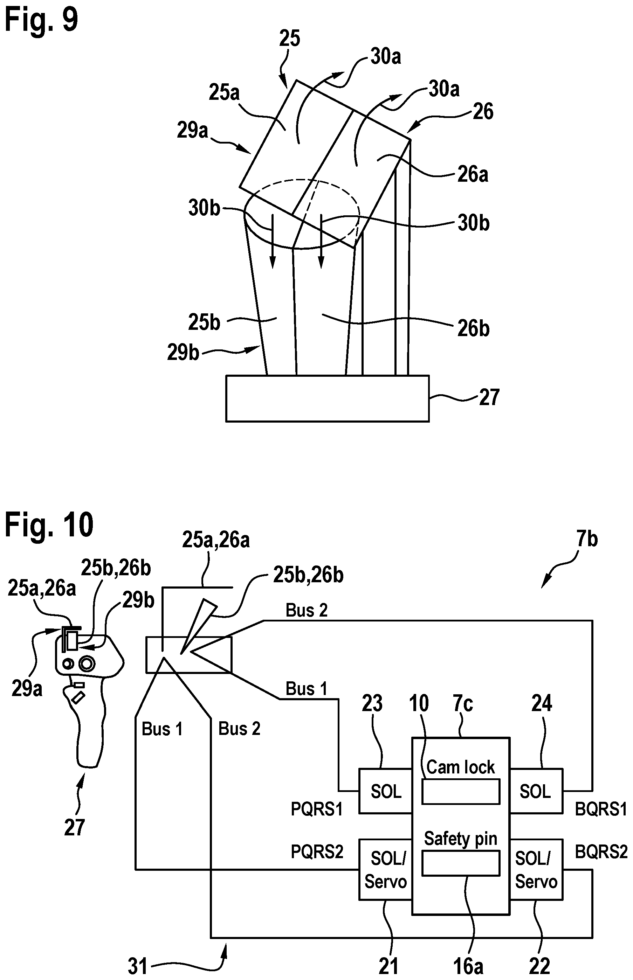

Figure 9 shows the cyclic stick 27 of Figure 8(A) with the operating elements 25a, 25b. However, in contrast to Figure 8(A), the cyclic stick 27 now also comprises the operating elements 26a, 26b of Figure 8(B) such that a dual activation device is provided, as explained hereinafter.

Illustratively, the operating elements 25a, 26a for triggering according to Figure 7 the PQRS2 and/or BQRS2, respectively, form a divided flip cover 29a. Therein, the operating element 25a forms a first part of the divided flip cover 29a, and the operating element 26a forms a second part of the divided flip cover 29a. Furthermore, the operating elements 25b, 26b for triggering according to Figure 7 the PQRS1 and/or BQRS1, respectively, form a divided switch or pushbutton 29b. Therein, the operating element 25b forms a first part of the divided switch or pushbutton 29b, and the operating element 26b forms a second part of the divided switch or pushbutton 29b.

The operating elements 25a, 26a, i. e. the respective parts of the divided flip cover 29a, must preferably be pivoted in a rotation direction 30a for triggering the PQRS2 and/or BQRS2, respectively. The operating elements 25b, 26b, i. e. the respective parts of the divided switch or pushbutton 29b, must preferably be pushed in a length direction 30b for triggering the PQRS1 and/or BQRS1, respectively. Thus, two different movement directions are required for triggering the PQRS2 or the BQRS2 and one of the PQRS1 or the BQRS1.

Figure 10 shows a functional diagram 7b explaining operation of the activatable locking lever 10 and the safety pin 16a, which form the actively controllable blocking and releasing components 7c according to Figure 7. Similar to Figure 7, the safety pin 16a is shown with the main safety locking device actuator 21 and the redundant safety locking device actuator 22, and the activatable locking lever 10 is shown with the main locking lever actuator 23 and the redundant locking lever actuator 24. The main locking lever actuator 23 acts as PQRS1, the redundant locking lever actuator 24 acts as BQRS1, the main safety locking device actuator 21 acts as PQRS2, and the redundant safety locking device actuator 22 acts as BQRS2. The PQRS1, PQRS2, BQRS1, and BQRS2 are electrically triggered via the associated bus system 31 using the operating elements 25a, 25b, 26a, 26b.

According to Figure 9, the operating elements 25a, 26a for triggering the PQRS2 and/or BQRS2, respectively, form the divided flip cover 29a of the cyclic stick 27. Furthermore, the operating elements 25b, 26b for triggering the PQRS1 and/or BQRS1, respectively, form the divided switch or pushbutton 29b.

As explained above at Figure 7, the PQRS1 and the PQRS2 are triggered via the same bus Bus 1 and they may be connected to a common, first power source. The BQRS1 and the BQRS2 are triggered via the same bus Bus 2, as explained at Figure 7, and they may be connected to a common, second power source which differs from the first power source.

### Reference List

1 rotorcraft
1a main rotor
2 fuselage
2a tail boom
2b cabin
2c bottom shell
3 counter-torque device
4 fin
5 cargo hook device
6 device housing
6a device mounting shaft
6b cargo hook closing latch
7 cargo hook blocking and releasing mechanism
7a, 7b functional diagrams
7c actively controllable blocking and releasing components
8 cargo hook
8a cargo hook rotation shaft
9 cargo hook blocking arm
9a blocking arm rotation shaft
9b, 9c roller bearings
10 activatable locking lever
10a locking lever rotation shaft
11 activatable safety locking device
11a safety pin
12 locking lever releasing rotation direction
13 blocking arm releasing rotation direction
14 safety pin releasing movement direction
15 cargo hook releasing rotation direction
16, 17, 18, 19 alternative safety locking devices
16a, 17a, 18a, 19a safety pins of alternative safety locking devices
16b spring element
16c safety locking device housing
16d safety pin base
20 alternative safety pin end face position
21 primary quick release system actuator of safety locking device
22 back-up quick release system actuator of safety locking device
23 primary quick release system actuator of locking lever
24 back-up quick release system actuator of locking lever
25 primary quick release system operating element
25a operating element of primary quick release system actuator of safety locking device
25b operating element of primary quick release system actuator of locking lever
26 back-up quick release system operating element
26a operating element of back-up quick release system actuator of safety locking device
26b operating element of back-up quick release system actuator of locking lever
27 rotorcraft cyclic stick
28 rotorcraft collective lever
29a divided flip cover
29b divided switch
30a, 30b movement directions
31 bus system

## Claims

1. A cargo hook device (5) with a housing (6) that is adapted for attachment to a rotorcraft (1), **characterized in that** the housing (6) accommodates at least partly:
a cargo hook (8) that is adapted for carrying a cargo in a closed position and that is rotatable between the closed position and an open position; and
a cargo hook blocking and releasing mechanism (7) that is adapted for blocking, in a locked state, the cargo hook (8) in the closed position and for releasing, in a released state, the cargo hook (8) to enable rotation of the cargo hook (8) between the closed position and the open position, wherein the cargo hook blocking and releasing mechanism (7) comprises:
a blocking arm (9) that blocks, in the locked state, movement of the cargo hook (8),
an activatable locking lever (10) that blocks, in the locked state, movement of the blocking arm (9), and
an activatable safety locking device (11) that blocks, in the locked state, movement of one of the cargo hook (8), the blocking arm (9), or the activatable locking lever (10);
wherein the activatable locking lever (10) and the activatable safety locking device (11) are activatable independently one from the other;
**characterised by** the fact that the cargo hook device (5) comprises an additional or alternative activatable safety locking device (16) which comprises a movable safety element (16a) and a spring element (16b) configured to bias the movable safety element (16a) into a blocking position;
wherein the cargo hook blocking and releasing mechanism (7) comprises at least one safety locking device actuator (21, 22) configured to actuate the activatable safety locking device (16); and
wherein the cargo hook blocking and releasing mechanism (7) comprises at least a main safety locking device actuator (21) and a redundant safety locking device actuator (22) configured to actuate the activatable safety locking device (16), wherein the main safety locking device actuator (21) and the redundant safety locking device actuator (22) are configured to be operable independently one from each other.

2. The cargo hook device (5) of claim 1, wherein the cargo hook (8) is rotatably mounted to the housing (6) by means of a cargo hook rotation shaft (8a).

3. The cargo hook device (5) of claim 1 or 2, wherein the blocking arm (9) is rotatably mounted to the housing (6) by means of a blocking arm rotation shaft (9a).

4. The cargo hook device (5) of any one of the preceding claims, wherein the blocking arm (9) comprises a first bearing (9c) that abuts, in the locked state, against the cargo hook (8) to block movement of the cargo hook (8).

5. The cargo hook device (5) of claim 4, wherein the blocking arm (9) comprises a second bearing (9b) that abuts, in the locked state, against the activatable locking lever (10) to block movement of the blocking arm (9).

6. The cargo hook device (5) of any one of the preceding claims, wherein the activatable locking lever (10) is rotatably mounted to the housing (6) by means of a locking lever rotation shaft (10a).

7. The cargo hook device (5) of any one of the preceding claims, wherein the cargo hook blocking and releasing mechanism (7) comprises at least one locking lever actuator (23, 24) for actuating the activatable locking lever (10).

8. The cargo hook device (5) of any one of the preceding claims, wherein the cargo hook blocking and releasing mechanism (7) comprises at least a main locking lever actuator (23) and a redundant locking lever actuator (24) for actuating the activatable locking lever (10), wherein the main locking lever actuator (23) and the redundant locking lever actuator (24) are operable independent from each other.

9. A rotorcraft (1) with a fuselage (2) and a cargo hook device (5) according to any one of claims 1 to 8 that is mounted to the fuselage (2).

10. The rotorcraft (1) of claim 9, wherein the cargo hook blocking and releasing mechanism (7) of the cargo hook device (5) comprises at least the main safety locking device actuator (21) and the redundant safety locking device actuator (22) for actuating the activatable safety locking device (16), wherein the main safety locking device actuator (21) and the redundant safety locking device actuator (22) are operable independent from each other, wherein a first operating element (25a) for operating the main safety locking device actuator (21) is provided on a first control element (27) of the rotorcraft (1), and wherein a second operating element (26a) for operating the redundant safety locking device actuator (22) is provided on a second control element (28) of the rotorcraft (1).

11. The rotorcraft (1) of claim 9, wherein the cargo hook blocking and releasing mechanism (7) of the cargo hook device (5) comprises at least the main safety locking device actuator (21) and the redundant safety locking device actuator (22) for actuating the activatable safety locking device (16), wherein the main safety locking device actuator (21) and the redundant safety locking device actuator (22) are operable independent from each other, and wherein two separate operating elements (25a, 26a) for independently operating the main safety locking device actuator (21) and the redundant safety locking device actuator (22) are provided together on a single control element (27) of the rotorcraft (1).

## Patentansprüche

1. Lasthakenvorrichtung (5) mit einem zur Anbringung an einem Drehflügler (1) geeigneten Gehäuse (6), **dadurch gekennzeichnet, dass** das Gehäuse (6) zumindest teilweise aufnimmt:
einen Lasthaken (8), der in einer geschlossenen Position zum Tragen einer Last geeignet ist und zwischen der geschlossenen Position und einer offenen Position drehbar ist; und
einen Lasthaken-Sperr- und Freigabemechanismus (7), der dazu ausgelegt ist, in einem verriegelten Zustand den Lasthaken (8) in der geschlossenen Position zu sperren und in einem freigegebenen Zustand den Lasthaken (8) freizugeben, um eine Drehung des Lasthakens (8) zwischen der geschlossenen Position und der offenen Position zu ermöglichen, wobei der Lasthaken-Sperr- und Freigabemechanismus (7) umfasst:
einen Sperrarm (9), der in verriegeltem Zustand eine Bewegung des Lasthakens (8) sperrt,
einen aktivierbaren Verriegelungshebel (10), der in verriegeltem Zustand eine Bewegung des Sperrarms (9) sperrt, und
eine aktivierbare Sicherheitsverriegelungsvorrichtung (11), die in verriegeltem Zustand eine Bewegung entweder des Lasthakens (8), des Sperrarms (9) oder des aktivierbaren Verriegelungshebels (10) sperrt;
wobei der aktivierbare Verriegelungshebel (10) und die aktivierbare Sicherheitsverriegelungsvorrichtung (11) unabhängig voneinander aktivierbar sind;
**dadurch gekennzeichnet, dass** die Lasthakenvorrichtung (5) eine zusätzliche oder alternative aktivierbare Sicherheitsverriegelungsvorrichtung (16) umfasst, die ein bewegliches Sicherheitselement (16a) und ein Federelement (16b) umfasst, das konfiguriert ist, um das bewegliche Sicherheitselement (16a) in eine Sperrposition vorzuspannen;
wobei der Lasthaken-Sperr- und Freigabemechanismus (7) mindestens einen Sicherheitsverriegelungsvorrichtungsbetätiger (21, 22) umfasst, der konfiguriert ist, um die aktivierbare Sicherheitsverriegelungsvorrichtung (16) zu betätigen; und
wobei der Lasthaken-Sperr- und -Freigabemechanismus (7) mindestens einen Haupt-Sicherheitsverriegelungsvorrichtungsbetätiger (21) und einen redundanten Sicherheitsverriegelungsvorrichtungsbetätiger (22) umfasst, die konfiguriert sind, um die aktivierbare Sicherheitsverriegelungsvorrichtung (16) zu betätigen, wobei der Haupt-Sicherheitsverriegelungsvorrichtungsbetätiger (21) und der redundante Sicherheitsverriegelungsvorrichtungsbetätiger (22) konfiguriert sind, um unabhängig voneinander bedienbar zu sein.

2. Lasthakenvorrichtung (5) nach Anspruch 1, bei der der Lasthaken (8) mittels einer Lasthaken-Drehwelle (8a) drehbar an dem Gehäuse (6) angebracht ist.

3. Lasthakenvorrichtung (5) nach Anspruch 1 oder 2, bei der der Sperrarm (9) mittels einer Sperrarm-Drehwelle (9a) drehbar am Gehäuse (6) angebracht ist.

4. Lasthakenvorrichtung (5) nach einem der vorstehenden Ansprüche, bei der der Sperrarm (9) ein erstes Lager (9c) umfasst, das im verriegelten Zustand am Lasthaken (8) anliegt, um die Bewegung des Lasthakens (8) zu blockieren.

5. Lasthakenvorrichtung (5) nach Anspruch 4, bei der der Sperrarm (9) ein zweites Lager (9b) umfasst, das im verriegelten Zustand an dem aktivierbaren Verriegelungshebel (10) anliegt, um die Bewegung des Sperrarms (9) zu blockieren.

6. Lasthakenvorrichtung (5) nach einem der vorstehenden Ansprüche, bei der der aktivierbare Verriegelungshebel (10) mittels einer Verriegelungshebel-Drehwelle (10a) drehbar am Gehäuse (6) angebracht ist.

7. Lasthakenvorrichtung (5) nach einem der vorstehenden Ansprüche, bei der der Lasthaken-Sperr- und -Freigabemechanismus (7) mindestens einen Verriegelungshebelbetätiger (23, 24) zum Betätigen des aktivierbaren Verriegelungshebels (10) umfasst.

8. Lasthakenvorrichtung (5) nach einem der vorstehenden Ansprüche, bei der der Lasthaken-Sperr- und -Freigabemechanismus (7) mindestens einen Hauptverriegelungshebelbetätiger (23) und einen redundanten Verriegelungshebelbetätiger (24) zum Betätigen des aktivierbaren Verriegelungshebels (10) umfasst, wobei der Hauptverriegelungshebelbetätiger (23) und der redundante Verriegelungshebelbetätiger (24) unabhängig voneinander bedienbar sind.

9. Drehflügler (1) mit einem Rumpf (2) und einer an dem Rumpf (2) angebrachten Lasthakenvorrichtung (5) nach einem der Ansprüche 1 bis 8.

10. Drehflügler (1) nach Anspruch 9, bei dem der Lasthaken- Sperrund -Freigabemechanismus (7) der Lasthakenvorrichtung (5) mindestens den Hauptsicherheitsverriegelungsvorrichtungsbetätiger (21) und den redundanten Sicherheitsverriegelungsvorrichtungsbetätiger (22) zum Betätigen der aktivierbaren Sicherheitsverriegelungsvorrichtung (16) umfasst, wobei der Hauptsicherheitsverriegelungsvorrichtungsbetätiger (21) und der redundante Sicherheitsverriegelungsvorrichtungsbetätiger (22) unabhängig voneinander bedienbar sind, wobei ein erstes Bedienelement (25a) zum Bedienen des Hauptsicherheitsverriegelungsvorrichtungsbetätigers (21) an einem ersten Steuerelement (27) des Drehflüglers (1) vorgesehen ist, und wobei ein zweites Bedienelement (26a) zum Bedienen des redundanten Sicherheitsverriegelungsvorrichtungsbetätigers (22) an einem zweiten Steuerelement (28) des Drehflüglers (1) vorgesehen ist.

11. Drehflügler (1) nach Anspruch 9, bei dem der Frachthaken-Sperr- und -Freigabemechanismus (7) der Frachthakenvorrichtung (5) mindestens den Hauptsicherheitsverriegelungsvorrichtungsbetätiger (21) und den redundanten Sicherheitsverriegelungsvorrichtungsbetätiger (22) zum Betätigen der aktivierbaren Sicherheitsverriegelungsvorrichtung (16) umfasst, wobei der Hauptsicherheitsverriegelungsvorrichtungsbetätiger (21) und der redundante Sicherheitsverriegelungsvorrichtungsbetätiger (22) unabhängig voneinander bedienbar sind und wobei zwei separate Bedienelemente (25a, 26a) zum unabhängigen Bedienen des Hauptsicherheitsverriegelungsvorrichtungsbetätigers (21) und des redundanten Sicherheitsverriegelungsvorrichtungsbetätigers (22) zusammen an einem einzigen Steuerelement (27) des Drehflüglers (1) vorgesehen sind.

## Revendications

1. Dispositif (5) de crochet de charge avec un logement (6) qui est adapté pour être fixé à un giravion (1), **caractérisé en ce que** le logement (6) accueille au moins partiellement :
un crochet (8) de charge qui est adapté pour porter une charge, dans une position fermée, et qui est adapté pour pivoter entre la position fermée et une position ouverte ; et
un mécanisme (7) de blocage et de déblocage du crochet de charge qui est adapté pour bloquer, dans un état verrouillé, le crochet (8) de charge dans la position fermée et à débloquer le crochet (8) de charge, dans un état de déblocage, pour permettre la rotation du crochet (8) de charge entre la position fermée et la position ouverte, dans lequel le mécanisme (7) de blocage et de déblocage du crochet de charge comprend :
un bras (9) de blocage qui bloque, dans l'état verrouillé, le déplacement du crochet (8) de charge,
un levier (10) de verrouillage actionnable qui bloque, dans l'état verrouillé, le déplacement du bras (9) de blocage, et
un dispositif (11) de verrouillage de sécurité actionnable qui bloque, dans l'état verrouillé, le déplacement de l'un parmi le crochet (8) de charge, le bras (9) de blocage, ou le levier (10) de verrouillage actionnable ;
dans lequel le levier (10) de verrouillage actionnable et le dispositif (11) de verrouillage de sécurité actionnable peuvent être activés indépendamment l'un de l'autre ;
**caractérisé en ce que** le dispositif (5) de crochet de charge comprend un dispositif (16) de verrouillage de sécurité actionnable alternative ou supplémentaire qui comprend un élément (16a) de sécurité adapté pour être déplacé et un élément (16b) formant ressort configuré pour déplacer l'élément (16a) de sécurité adapté pour être déplacé vers une position de blocage ;
dans lequel le mécanisme (7) de blocage et de déblocage du crochet de charge comprend au moins un actionneur (21, 22) de dispositif de verrouillage de sécurité configuré pour actionner le dispositif (16) de verrouillage de sécurité actionnable ; et
dans lequel le mécanisme (7) de blocage et de déblocage du crochet de charge comprend au moins un actionneur (21) de dispositif de verrouillage de sécurité principal et un actionneur (22) de dispositif de verrouillage de sécurité redondant configurés pour actionner le dispositif (16) de verrouillage de sécurité actionnable, dans lequel l'actionneur (21) de dispositif de verrouillage de sécurité principal et l'actionneur (22) de dispositif de verrouillage de sécurité redondant sont configurés pour fonctionner indépendamment l'un de l'autre.

2. Dispositif (5) de crochet de charge selon la revendication 1, dans lequel le crochet (8) de charge est monté à pivotement sur le logement (6) au moyen d'un arbre (8a) de rotation du crochet de charge.

3. Dispositif (5) de crochet de charge selon la revendication 1 ou 2, dans lequel le bras (9) de blocage est monté à pivotement sur le logement (6) au moyen d'un arbre (9a) de rotation du bras de blocage.

4. Dispositif (5) de crochet de charge selon l'une quelconque des revendications précédentes, dans lequel le bras (9) de blocage comprend un premier palier (9c) qui vient en butée, dans l'état verrouillé, contre le crochet (8) de charge afin de bloquer le déplacement du crochet (8) de charge.

5. Dispositif (5) de crochet de charge selon la revendication 4, dans lequel le bras (9) de blocage comprend un second palier (9b) qui vient en butée, dans l'état verrouillé, contre le levier (10) de verrouillage actionnable afin de bloquer le déplacement du bras (9) de blocage.

6. Dispositif (5) de crochet de charge selon l'une quelconque des revendications précédentes, dans lequel le levier (10) de verrouillage actionnable est monté à pivotement sur le logement (6) au moyen d'un arbre (10a) de rotation du levier de verrouillage.

7. Dispositif (5) de crochet de charge selon l'une quelconque des revendications précédentes, dans lequel le mécanisme (7) de blocage et de déblocage comprend au moins un actionneur (23, 24) de levier de verrouillage afin d'actionner le levier (10) de verrouillage actionnable.

8. Dispositif (5) de crochet de charge selon l'une quelconque des revendications précédentes, dans lequel le mécanisme (7) de blocage et de déblocage comprend au moins un actionneur (23) de levier de verrouillage principal et un actionneur (23) de levier de verrouillage redondant afin d'actionner le levier (10) de verrouillage actionnable, dans lequel l'actionneur (23) de levier de verrouillage principal et l'actionneur (24) de levier de verrouillage redondant sont aptes à fonctionner indépendamment l'un de l'autre.

9. Giravion (1) avec un fuselage (2) et un dispositif (5) de crochet de charge selon l'une quelconque des revendications 1 à 8 qui est monté sur le fuselage (2).

10. Giravion (1) selon la revendication 9, dans lequel le mécanisme (7) de blocage et de déblocage du dispositif (5) de crochet de charge comprend au moins l'actionneur (21) de dispositif de verrouillage de sécurité principal et l'actionneur (22) de dispositif de verrouillage de sécurité redondant afin d'actionner le dispositif (16) de verrouillage de sécurité actionnable, dans lequel l'actionneur (21) de dispositif de verrouillage de sécurité principal et l'actionneur (22) de dispositif de verrouillage de sécurité redondant sont aptes à fonctionner indépendamment l'un de l'autre, dans lequel un premier élément (25a) de fonctionnement pour commander l'actionneur (21) de dispositif de verrouillage de sécurité principal est prévu sur un premier élément (27) de commande du giravion (1), et dans lequel un second élément (26a) de fonctionnement pour commander l'actionneur (22) de dispositif de verrouillage de sécurité redondant est prévu sur un second élément (28) de commande du giravion (1).

11. Giravion (1) selon la revendication 9, dans lequel le mécanisme (7) de blocage et de déblocage du crochet de charge du dispositif (5) de crochet de charge comprend au moins l'actionneur (21) de dispositif de verrouillage de sécurité et l'actionneur (22) de dispositif de verrouillage de sécurité redondant afin d'actionner le dispositif (16) de verrouillage de sécurité actionnable, dans lequel l'actionneur (21) de dispositif de verrouillage de sécurité principal et l'actionneur (22) de dispositif de verrouillage de sécurité redondant sont aptes à fonctionner indépendamment l'un de l'autre, et dans lequel deux éléments (25a, 26a) de fonctionnement distincts sont tous deux prévus sur un élément (27) de commande unique du giravion (1) pour commander l'actionneur (21) de dispositif de verrouillage de sécurité principal indépendamment de l'actionneur (22) de dispositif de verrouillage de sécurité edondant.
